Europäisches Patentamt

European Patent Office

Office européen des brevets

(11) Numéro de publication : **0 020 221**
**B1**

# (12) FASCICULE DE BREVET EUROPÉEN

(45) Date de publication du fascicule du brevet :
**21.03.84**

(21) Numéro de dépôt : **80400653.4**

(22) Date de dépôt : **12.05.80**

(51) Int. Cl.³ : **C 03 B 25/08**

(54) **Procédé de réglage de la température du verre dans une étenderle et étenderle pour la mise en œuvre de ce procédé.**

(30) Priorité : **16.05.79 FR 7913281**

(43) Date de publication de la demande :
**10.12.80 Bulletin 80/25**

(45) Mention de la délivrance du brevet :
**21.03.84 Bulletin 84/12**

(84) Etats contractants désignés :
**BE DE GB**

(56) Documents cités :
**DE-A- 1 496 423**
**DE-B- 2 158 253**
**DE-C-  633 213**
**DE-C-  752 085**
**DE-C-  931 725**
**DE-A-O 877 VIb/32a**

(73) Titulaire : **STEIN SURFACE Société Anonyme**
**Z.A.I. du Bois de l'Epine**
**F-91130 Ris Orangis (FR)**

(72) Inventeur : **Garcelon, Jean-Paul**
**104 bis, rue Pelleport**
**F-75020 Paris (FR)**

(74) Mandataire : **Boivin, Claude**
**9, rue Edouard-Charton**
**F-78000 Versailles (FR)**

Jouve, 18, rue St-Denis, 75001 Paris, France

## Procédé de réglage de la température du verre dans une étenderie et étenderie pour la mise en œuvre de ce procédé

Le verre plat fabriqué en continu traverse un tunnel calorifugé, dénommé étenderie, qui est muni de moyens de chauffage ainsi que de moyens de refroidissement et dans lequel le verre est refroidi et recuit.

Dans les étenderies actuellement réalisées, les moyens de refroidissement sont constitués par une série de tubes échangeurs qui sont placés à l'intérieur du tunnel en deux nappes horizontales, de part et d'autre du ruban de verre, en étant regroupés en plusieurs batteries transversales et à l'intérieur duquel on fait circuler à contre courant, de l'air, initialement à la température ambiante. De leur côté, les moyens de chauffage sont électriques, et formés par des fils résistants nus ou blindés placés entre les tubes échangeurs et le verre. En agissant sur le débit d'air, on modifie le refroidissement du verre ; de même, en agissant sur la puissance émise par les fils résistants, on modifie son chauffage.

Ce procédé de contrôle de la température du verre présente un certain nombre d'inconvénients graves, en particulier lorsqu'il s'agit d'un ruban de verre transparent et/ou revêtu sur une face d'une couche fortement réflectrice.

En effet, le verre est un mauvais conducteur de la chaleur et, lors de son refroidissement, un gradient de température notable apparaît entre la surface du ruban de verre et sa partie centrale. Si le verre est encore plastique, les contraintes créées par le gradient de température produisent une déformation du ruban de verre. Si le verre est suffisamment refroidi pour être parfaitement élastique, ce gradient de température engendre dans le ruban de verre des tensions internes qui demeurent puisque le ruban n'est plus plastique.

L'expérience montre que, pour que l'effet du gradient de température soit minimal, il y a avantage à ce que le refroidissement du verre soit uniforme sur la longueur de l'étenderie, c'est-à-dire que la température du verre décroisse sensiblement linéairement. Or, on constate que, lorsqu'on admet de l'air froid à l'extrémité d'entrée des tubes d'échange, le refroidissement n'est pas du tout uniforme ; le verre se refroidit beaucoup plus rapidement à la sortie de la zone considérée de l'étenderie qu'à l'entrée de celle-ci, de sorte que des tensions internes sont induites dans le verre, dans la région centrale de la plage de recuisson.

D'autre part, le verre se refroidit davantage sur ses bords longitudinaux que dans sa partie centrale. Si, pour remédier à ce gradient de température transversal, on met en service les moyens de chauffage placés à proximité des bords longitudinaux de l'étenderie, ces moyens de chauffage rayonnent sur les moyens de refroidissement adjacents ; cette interaction rend difficile l'obtention d'une température qui soit optimale et uniforme sur toute la largeur du ruban de verre.

Il est très difficile de remédier à ces inconvénients, car les moyens de refroidissement ont un temps de réponse long, alors que les moyens de chauffage électriques ont un temps de réponse relativement court et entraînent une surchauffe du verre quand ils sont mis en action.

Le DE-C-931 725 décrit une étenderie comportant un four tunnel et des moyens pour faire passer un ruban de verre dans ce tunnel. Deux nappes de tubes échangeurs longitudinaux traversés par des gaz chauds s'étendent respectivement au-dessus et au-dessous du trajet du ruban de verre. Ces tubes permettent aussi bien de chauffer le ruban de verre que de le refroidir par la suite. Mais ce four ne permet pas non plus de porter le ruban de verre à une température qui soit uniforme transversalement étant donné que, comme il a été indiqué précédemment, le verre se refroidit davantage sur ses bords longitudinaux.

La DE-B-2 158 253 décrit un dispositif pour le refroidissement d'un ruban de verre, dans lequel on règle la température transversalement à la direction de mouvement du ruban de verre au moyen d'une batterie de conduites d'air caloporteur pourvues chacune d'une vanne de régulation de débit. Mais ce dispositif a pour but de refroidir rapidement le ruban de verre et ne permet pas un refroidissement lent et uniforme, comme cela est souhaitable dans une étenderie.

La présente invention a pour objet un procédé de réglage de la température du verre dans une étenderie dans laquelle on fait passer un ruban de verre dans un tunnel et dans laquelle des nappes de tubes longitudinaux sont prévues au-dessus et en dessous du ruban de verre, procédé dans lequel on admet à l'entrée des tubes de l'air réchauffé et qui remédie à l'inconvénient signalé ci-dessus.

Ce procédé est caractérisé en ce qu'on divise transversalement les nappes de tubes en batteries, en ce qu'on chauffe séparément l'air pour chacune des batteries en admettant l'air réchauffé aux tubes de la batterie considérée, et en ce qu'on règle la température et le débit de l'air traversant chaque batterie de tubes en fonction de la température du ruban de verre à la sortie d'une zone donnée.

En admettant dans les tubes de l'air relativement chaud, on peut assurer la montée en température de l'étenderie ou la maintenir en température en l'absence de verre. En y admettant de l'air moins chaud à une température inférieure à celle du verre, on peut refroidir le verre en production continue et obtenir un refroidissement régulier du verre.

L'air traversant les tubes peut circuler en circuit ouvert ou en circuit fermé.

La présente invention a également pour objet une étenderie pour la mise en œuvre de ce procédé.

L'étenderie selon l'invention comprend un tunnel, des moyens pour faire passer un ruban de verre dans ce tunnel, deux nappes de tubes échangeurs longitudinaux s'étendant respectivement au-dessus et en dessous du trajet du ruban de verre et des moyens pour admettre de l'air réchauffé à l'entrée des tubes, et est caractérisée en ce que les nappes de tubes sont divisées transversalement en batteries, en ce que l'étenderie comporte des moyens pour admettre de l'air réchauffé indépendamment dans chaque batterie de tubes, des moyens pour mesurer la température du ruban de verre à la sortie d'une zone donnée, et des moyens pour régler en fonction de la température ainsi mesurée la température et le débit de l'air admis dans chaque batterie de tubes.

L'étenderie peut comprendre des moyens pour recycler à l'entrée de chaque batterie de tubes une partie de l'air sortant de cette batterie ; dans ce cas elle peut également comporter des moyens pour refroidir l'air recyclé. Ces moyens peuvent, par exemple, être constitués par un dispositif d'introduction d'air froid ou par des échangeurs indirects à fluide frigorifique.

On a décrit ci-après, à titre d'exemples non limitatifs, deux modes de réalisation d'une étenderie selon l'invention, avec référence aux dessins annexés dans lesquels :

la Figure 1 est une vue en perspective schématique d'une zone de l'étenderie, dans un premier mode de réalisation ;

la Figure 2 est une coupe longitudinale d'une partie de cette zone ;

la Figure 3 est une vue analogue à la Figure 1 d'un second mode de réalisation.

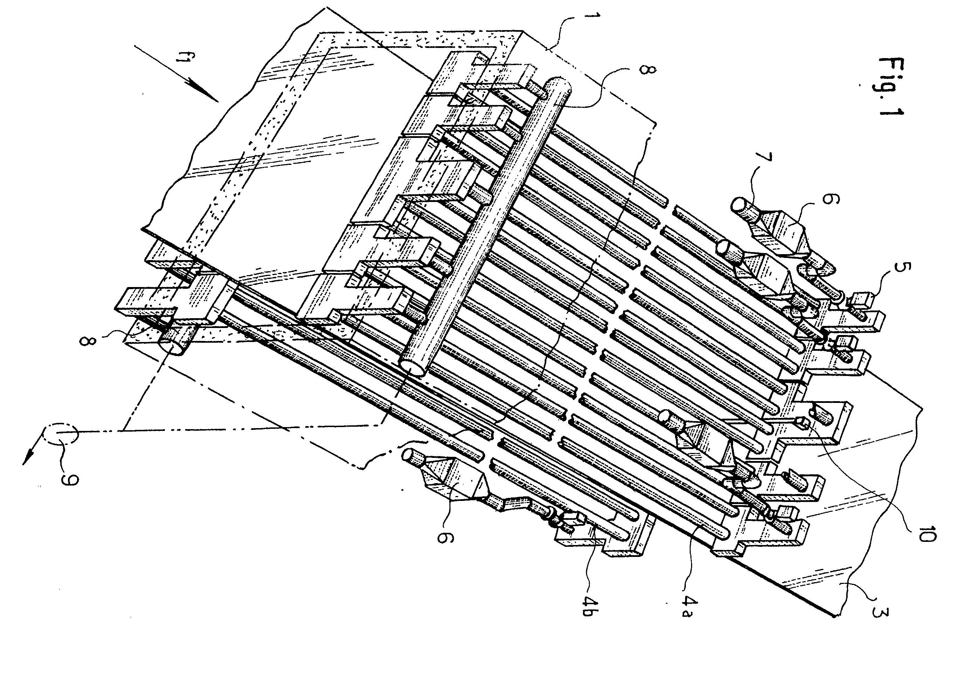

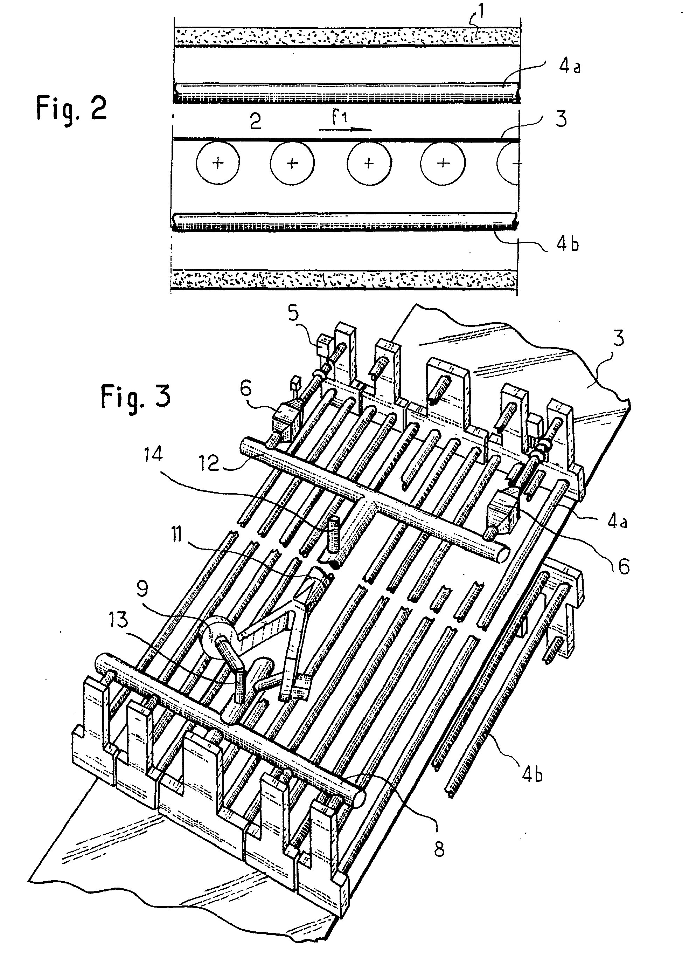

Telle qu'elle est représentée aux Figures 1 et 2, l'étenderie selon l'invention comprend un tunnel calorifugé 1 qui comporte des rouleaux 2 destinés à supporter un ruban de verre 3 circulant dans le sens de la flèche $f_1$.

Elle est divisée sur sa longueur en zones successives. Dans chacune de ces zones, elle comprend deux nappes horizontales de tubes échangeurs longitudinaux 4a et 4b placés l'une au-dessus du ruban 3 et l'autre en dessous. Chacune de ces nappes est divisée transversalement en batteries qui sont au nombre de cinq dans l'exemple de réalisation représenté.

L'entrée de chacune des batteries de tubes, placée à l'aval de la zone considérée, est connectée à une vanne de régulation de débit 5 et à des moyens de chauffage 6, par exemple à brûleurs auxquels de l'air frais est admis en 7. La sortie des tubes est connectée par un collecteur 8 à l'aspiration d'un ventilateur 9 alimentant un dispositif de récupération de chaleur secondaire. L'air circule ainsi à contre-courant.

Un capteur 10 mesure la température du verre à la sortie de la zone et agit par des moyens de régulation non représentés sur les vannes 5 et les moyens de chauffage 6.

En agissant sur les vannes et les moyens de chauffage des différentes batteries, on peut, par exemple, chauffer les bords extérieurs de la nappe 3 et refroidir sa zone médiane.

Le mode de réalisation de la Figure 3 est semblable, dans ses grandes lignes, à celui des Figures 1 et 2, mais l'air circule en circuit fermé.

La sortie du ventilateur 9 est reliée par un conduit 11 à un collecteur 12 alimentant les différents moyens de chauffage 6. Une conduite d'évacuation d'air chaud 14 et une conduite d'admission d'air frais 13 sont branchées de part et d'autre du ventilateur 9. On fait varier le débit d'air et la capacité de refroidissement en modifiant la vitesse du ventilateur 9, le débit d'air frais admis par la conduite 13 et celui d'air chaud évacué par la conduite 14. Cette dernière conduite est reliée à un dispositif de récupération de chaleur secondaire.

**Revendications**

1. Procédé de réglage de la température du verre dans une étenderie dans laquelle on fait passer un ruban de verre (3) dans un tunnel (1) et dans laquelle des nappes de tubes longitudinaux (4a et 4b) sont prévues au-dessus et en dessous du ruban de verre (3), dans lequel on admet à l'entrée des tubes (4a et 4b) de l'air réchauffé, caractérisé en ce qu'on divise transversalement les nappes de tubes (4a et 4b) en batteries, en ce qu'on chauffe séparément l'air pour chacune des batteries en admettant l'air réchauffé aux tubes de la batterie considérée, et en ce qu'on règle la température et le débit de l'air traversant chaque batterie de tubes en fonction de la température du ruban de verre (3) à la sortie d'une zone donnée.

2. Procédé selon la revendication 1, caractérisé en ce que dans chaque batterie de tubes, on recycle au moins une partie de l'air sortant de cette batterie de tubes.

3. Etenderie qui comprend un tunnel (1), des moyens (2) pour faire passer un ruban de verre (3) dans ce tunnel, deux nappes de tubes échangeurs longitudinaux (4a et 4b) s'étendant respectivement au-dessus et en dessous du trajet du ruban de verre (3) et des moyens (5-6-7) pour admettre de l'air réchauffé à l'entrée des tubes, caractérisée en ce que les nappes de tubes sont divisées transversalement en batteries, en ce que l'étenderie comporte des moyens pour admettre de l'air réchauffé indépendamment dans chaque batterie de tubes, des moyens (10) pour mesurer la température du ruban de verre à la sortie d'une zone donnée, et des moyens pour régler en fonction de la température ainsi mesurée la température et le débit de l'air admis dans chaque batterie de tubes.

4. Etenderie selon la revendication 3, caractérisée en ce qu'elle comprend des moyens (11) pour recycler à l'entrée de chaque batterie de tubes une partie de l'air sortant de cette batterie.

5. Etenderie selon la revendication 4, caractérisée en ce qu'elle comporte également des moyens (13) pour refroidir l'air recyclé.

**Claims**

1. Process for regulating the temperature of the glass in a rolling installation in which a ribbon of glass (3) is passed in a tunnel (1) and in which layers of longitudinal tubes (4a and 4b) are provided above and below the ribbon of glass (3), in which reheated air is admitted into the inlet of the tubes (4a and 4b), characterized in that the layers of tubes (4a and 4b) are divided transversely into sets, in that the air for each of the sets is heated separately, the reheated air being admitted to the tubes of the set in question, and in that the temperature and the flow of the air passing through each set of tubes is regulated as a function of the temperature of the ribbon of glass (3) on leaving a given zone.

2. Process according to Claim 1, characterized in that, in each set of tubes, at least part of the air leaving this set of tubes is recycled.

3. Rolling installation which comprises a tunnel (1), means (2) for passing a ribbon of glass (3) into this tunnel, two layers of longitudinal exchanger tubes (4a and 4b) extending respectively above and below the path of the ribbon of glass (3) and means (5-6-7) for admitting reheated air at the inlet of the tubes, characterized in that the layers of tubes are divided transversely into sets, in that the rolling installation comprises means for admitting reheated air independently in each set of tubes, means (10) for measuring the temperature of the ribbon of glass on leaving a given zone, and means for regulating, as a function of the temperature thus measured, the temperature and the flow of the air admitted into each set of tubes.

4. Rolling installation according to Claim 3, characterized in that it comprises means (11) for recycling at the inlet of each set of tubes, part of the air leaving this set.

5. Rolling installation according to Claim 4, characterized in that it further comprises means (13) for cooling the recycled air.

**Ansprüche**

1. Verfahren zur Regelung der Temperatur des Glases in einem Kühlofen, in welchem ein Glasband (3) durch einen Tunnel (1) hindurchgeführt wird und Bündel von längsverlaufenden Röhren (4a und 4b) oberhalb und unterhalb des Glasbandes (3) vorgesehen sind, welchem am Eingang der Röhren (4a und 4b) erhitzte Luft zugeführt wird, dadurch gekennzeichnet, daß die Bündel der Röhren (4a und 4b), in Querrichtung gesehen, in Batterien aufgeteilt sind, daß für jede der Batterien getrennt die Luft erhitzt wird, wobei die erhitzte Luft den Röhren der jeweiligen Batterie zugeführt wird, und daß die Temperatur und die Menge der jede Röhrenbatterie durchströmende Luft in Abhängigkeit von der Temperatur des Glasbandes (3) am Austritt eines gegebenen Bereiches geregelt wird.

2. Verfahren nach Anspruch 1, dadurch gekennzeichnet, daß aus jeder Röhrenbatterie wenigstens ein Teil der aus dieser Röhrenbatterie austretenden Luft in den Kreislauf zurückgeführt wird.

3. Kühlofen mit einem Tunnel (1), mit einer Einrichtung (2) zur Durchführung eines Glasbandes (3) in diesem Tunnel, mit zwei Bündeln von längsverlaufenden Wärmeaustauschröhren (4a und 4b), welche sich oberhalb bzw. unterhalb der Bahn des Glasbandes (3) erstrecken und mit einer Einrichtung (5-6-7) zur Zuführung erhitzter Luft zum Einlaß der Röhren, dadurch gekennzeichnet, daß die Röhrengruppen, in Querrichtung gesehen, in Batterien aufgeteilt sind, daß der Kühlofen eine Einrichtung, um erhitzte Luft in jede Röhrenbatterie einzeln einzuführen, eine Einrichtung (10) zur Messung der Temperatur des Glasbandes am Austritt eines gegebenen Bereiches und eine Einrichtung zur Regelung der Temperatur und der Menge der in jede Röhrenbatterie eingeführten Luft in Abhängigkeit von der auf diese Weise gemessenen Temperatur aufweist.

4. Kühlofen nach Anspruch 3, dadurch gekennzeichnet, daß er eine Einrichtung (11) aufweist, um zum Einlaß jeder Röhrenbatterie einen Teil der aus dieser Batterie austretenden Luft zurückzuführen.

5. Kühlofen nach Anspruch 4, dadurch gekennzeichnet, daß er auch eine Einrichtung (13) zur Kühlung der in den Kreislauf zurückgeführten Luft aufweist.

Fig. 1

Fig. 2

4a

2    f1    3

4b

Fig. 3

5

6

14    12

11

9

13

4a

6

4b

8